# EUROPÄISCHE PATENTANMELDUNG

(11) **EP 3 506 234 A1**
(43) Veröffentlichungstag der Anmeldung: **03.07.2019**
(21) Anmeldenummer: 17210680.9
(22) Anmeldetag: 27.12.2017
(51) Int. Cl.: G08G 1/005, G08G 1/00, G08G 1/14, G08G 1/01, G01S 19/10, G01S 5/14, G01S 5/10

(54) **VERFAHREN ZUR ERMITTLUNG DES ABSTELLPLATZES EINES FAHRZEUGS**

(71) Anmelder: SKIDATA AG, 5083 Grödig/Salzburg (AT)
(72) Erfinder: Clemente, Jorge, 5412 Puch bei Hallein (AT); Schönleitner, Peter, 5111 Bürmoos (AT)
(74) Vertreter: Karakatsanis, Georgios

(57) **Zusammenfassung**

Es wird ein Verfahren zur Ermittlung des Abstellplatzes (7) eines Fahrzeugs (3) vorgeschlagen, im Rahmen dessen als Abstellplatz (7) des Fahrzeugs (3) der Ort ermittelt wird, an dem ein im Fahrzeug befindliches mobiles elektronisches Gerät (6) von einem Fahrzeug-Bewegungsprofil in ein Fußgänger-Bewegungsprofil übergeht.

## Beschreibung

Die vorliegende Erfindung bezieht sich auf ein Verfahren zur Ermittlung des Abstellplatzes eines Fahrzeugs gemäß dem Oberbegriff des Patentanspruchs 1.

Aus dem Stand der Technik sind Verfahren zur Ermittlung des Abstellplatzes eines Fahrzeugs in einem Parkhaus oder auf einem Parkplatz bekannt. Hierbei ist in der Regel jedem Stellplatz ein Sensor zugeordnet, welcher ein abgestelltes Fahrzeug detektiert. Ferner kann vorgesehen sein, dass Fahrzeuge in einem Parkhaus anhand des vom Antriebsstrang emittierten Schallprofils in zumindest einem Geschwindigkeitsbereich identifiziert werden, wobei der Abstellplatz eines Fahrzeugs als Ort der letzten Lokalisierung des Fahrzeugs bei laufender Antriebseinheit ist. Des Weiteren ist aus dem Stand der Technik bekannt, Stellplätze von Fahrzeugen mittels Kameras zu ermitteln. Zur Durchführung oben genannter Verfahren sind in nachteiliger Weise mehrere geeignete Sensoren oder Kameras erforderlich.

Demnach erfolgt die Ermittlung des Abstellplatzes von Fahrzeugen nach den aus dem Stand der Technik bekannten Verfahren mittels der Infrastruktur des Parkplatzes oder des Parkhauses, wobei zur Weiterleitung der Information an den Fahrzeugfahrer weitere Schritte erforderlich sind.

Der vorliegenden Erfindung liegt die Aufgabe zugrunde, ein Verfahren zur Ermittlung des Abstellplatzes eines Fahrzeugs anzugeben.

Diese Aufgabe wird durch die Merkmale des Patentanspruchs 1 gelöst. Weitere Ausgestaltungen und Vorteile gehen aus den Unteransprüchen hervor.

Demnach wird ein Verfahren zur Ermittlung des Abstellplatzes eines Fahrzeugs vorgeschlagen, im Rahmen dessen als Abstellplatz des Fahrzeugs der Ort ermittelt wird, an dem ein im Fahrzeug befindliches mobiles elektronisches Gerät von dem Bewegungsprofil in einem Fahrzeug - im folgenden Fahrzeug-Bewegungsprofil genannt - in ein Fußgänger-Bewegungsprofil übergeht. Der Abstellplatz kann beispielsweise in einer Karte angezeigt werden.

Die Unterscheidung zwischen dem Fahrzeug-Bewegungsprofil und dem Fußgänger-Bewegungsprofil erfolgt mittels einer Auswertung der Daten der Sensoren des mobilen elektronischen Gerätes, beispielsweise mittels der Daten eines Accelerometers, eines Kompasses, eines magnetischen Sensors, eines Vibrationssensors und/oder eines Lichtsensors über geeignete Software im mobilen elektronischen Gerät, oder auch über Auswertung des Bewegungsprofils an sich wie z.B. Geschwindigkeit, Bewegung auf Straße, in Fußgängerbereichen, und ähnlichem.

Für den Fall eines Abstellplatzes im Freien oder für den Fall eines Parkhauses mit Satelliten-Empfang für das GPS-Modul der mobilen elektronischen Geräte wird der Ort, an dem das mobile elektronische Gerät vom Fahrzeug-Bewegungsprofil in ein Fußgänger-Bewegungsprofil übergeht anhand der GPS-Daten des GPS-Moduls des mobilen elektronischen Gerätes zu diesem Zeitpunkt, d.h. zum Zeitpunkt, an dem das mobile elektronische Gerät vom Fahrzeug-Bewegungsprofil in ein Fußgänger-Bewegungsprofil übergeht, ermittelt. In diesem Fall erfolgt ein Tracking des Fahrzeugs anhand der Daten des GPS-Moduls des mobilen elektronischen Gerätes. Die Ermittlung des Abstellplatzes erfolgt hierbei im mobilen elektronischen Gerät. Anstelle eines GPS-Signals kann jedes geeignete GNSS (Global Navigation Satellite System)-Signal, beispielsweise ein Galileo- oder Glonass - Signal in Verbindung mit einem geeigneten Empfangsmodul herangezogen werden.

Für den Fall, eines Abstellplatzes ohne GPS-Abdeckung, insbesondere eines Parkhauses, bei dem kein Satelliten-Empfang für das GPS-Modul der mobilen elektronischen Geräte vorhanden ist, wird der Ort, an dem das mobile elektronische Gerät vom Fahrzeug-Bewegungsprofil in ein Fußgänger-Bewegungsprofil übergeht, anhand eines Trackings des mobilen elektronischen Gerätes vorzugsweise mittels mit einem Server verbundener Mittel zur Detektion von mobilen elektronischen Geräten über einen Standard zur drahtlosen Kommunikation ermittelt. Hierbei sendet das mobile elektronische Gerät in periodischen Abständen oder nach Empfang eines von den Mittel zur Detektion von mobilen elektronischen Geräten gesendeten Signals ein Signal aus, welches von Mitteln zur Detektion von mobilen elektronischen Geräten empfangen wird.

Beispielsweise kann das Tracking mittels WLAN oder mittels des BLE- oder eines UWB-Standards erfolgen. Der Abstellplatz entspricht hierbei dem Ort der Lokalisierung des mobilen elektronischen Gerätes zum Zeitpunkt des Übergangs des mobilen elektronischen Gerätes vom Fahrzeug-Bewegungsprofil in ein Fußgänger-Bewegungsprofil. Wenn ein Tracking mittels mit dem Server verbundener Mittel zur Detektion von mobilen elektronischen Geräten durchgeführt wird, werden die Tracking-Daten über den Standard zur drahtlosen Kommunikation an das mobile elektronische Gerät übermittelt, wobei im mobilen elektronischen Gerät die Tracking-Daten dem Bewegungsprofil als Funktion der Zeit zugeordnet werden, wodurch der Abstellplatz ermittelt werden kann.

Hierbei erfolgt das Tracking bzw. die Lokalisierung der mobilen elektronischen Geräte beispielsweise dadurch, dass anhand einer Referenzsignalstärke, die in der Regel der Signalstärke in einem Meter Entfernung entspricht und die als Information im Signal des mobilen elektronischen Geräts enthalten ist oder in Abhängigkeit vom mobilen elektronischen Gerät, z.B. vom Typ des Mobiltelefons, in einer im Computer gespeicherten Tabelle abgelegt ist, der Abstand zwischen dem mobilen elektronischen Gerät und Mitteln zur Detektion von mobilen elektronischen Geräten, die z.B. als BLE-, UWB-, oder WLAN-Sende-Empfangseinheiten ausgeführt sein können, ermittelt wird, wobei anschließend eine Trilateration bzw. bei mehr als drei Sende-Empfangseinheiten eine Multilateration durchgeführt wird.

Alternativ können Signalgeber nach einem Standard zur drahtlosen Kommunikation vorgesehen sein, die beispielsweise als BLE-, UWB-, oder WLAN- Signalgeber ausgeführt sind, die in vorgegebenen Zeitintervallen Signale senden, welche von den mobilen elektronischen Geräten empfangen und in den mobilen elektronischen Geräten z.B. mittels einer App ausgewertet werden. Hierbei wird im mobilen elektronischen Gerät über die App in Reichweite eines Signalgebers der Signalgeber anhand einer Universally Unique Identifier (UUID) des Senders identifiziert und die Signalstärke gemessen. Wenn Signale von mindestens drei Signalgebern empfangen werden, lässt sich im mobilen elektronischen Gerät durch Trilateration oder mittels eines Fingerprinting-Verfahrens die Position des mobilen elektronischen Gerätes im zweidimensionalen Raum errechnen.

Gemäß einer Weiterbildung der Erfindung kann ein Tracking des mobilen elektronischen Gerätes mittels Mittel zur Detektion von mobilen elektronischen Geräten oder über BLE-, UWB-, oder WLAN- Signalgeber über einen Kommunikationsstandard zur drahtlosen Kommunikation auch dann erfolgen, wenn ein GPS-Signal vorhanden ist und ausgewertet wird, wodurch die Genauigkeit des Verfahrens erhöht wird.

Hierbei werden die Tracking-Daten des GPS-Signals, im Folgenden GPS-Daten genannt und die Daten des Trackings über Mittel zur Detektion von mobilen elektronischen Geräten oder über BLE-, UWB-, oder WLAN- Signalgeber im mobilen elektronischen Gerät anhand des jeweiligen Zeitstempels als Funktion der Zeit gespeichert. Die Daten des Trackings über Mittel zur Detektion von mobilen elektronischen Geräten werden zu diesem Zweck vom Server über die Mittel zur Detektion von mobilen elektronischen Geräten an das mobile elektronische Gerät übermittelt.

Wenn die GPS-Daten und die Tracking-Daten über Mittel zur Detektion von mobilen elektronischen Geräten oder über BLE-, UWB-, oder WLAN- Signalgeber den gleichen Zeitstempel aufweisen, was mit einer geringen Wahrscheinlichkeit vorkommen kann, wird angenommen, dass das GPS-Signal die höhere Genauigkeit aufweist. Durch die Kombination der Signale beider Verfahren wird eine Trackingsequenz zur Verfügung gestellt, welche doppelt so viele Signale aufweist, wie eine anhand eines der Verfahren erstellte Trackingsequenz.

Bei einer Diskrepanz zwischen den GPS-Daten und über Mittel zur Detektion von mobilen elektronischen Geräten oder über BLE-, UWB-, oder WLAN- Signalgeber gewonnenen Tracking-Daten, die einen vorgegebenen Schwellenwert überschreitet, wird angenommen, dass im Freien die GPS-Daten und in einem Gebäude, z.B. in einem Parkhaus die über Mittel zur Detektion von mobilen elektronischen Geräten oder über BLE-, UWB-, oder WLAN-Signalgeber gewonnenen Tracking-Daten genauer sind, so dass nur diese Daten herangezogen werden.

Zur Erhöhung der Genauigkeit der Ermittlung des Abstellplatzes des Fahrzeugs kann auch das Bewegungsprofil des Fahrzeugs herangezogen werden, welches anhand der GPS-Daten des mobilen elektronischen Gerätes und/oder anhand des Trackings des mobilen elektronischen Gerätes über Mittel zur Detektion von mobilen elektronischen Geräten oder über BLE-, UWB-, oder WLAN- Signalgeber gewonnen wird.

Hierbei werden die GPS-Daten und/oder die Tracking-Daten über Mittel zur Detektion von mobilen elektronischen Geräten oder über BLE-, UWB-, oder WLAN- Signalgeber im mobilen elektronischen Gerät als Funktion der Zeit analysiert, wobei, wenn die Daten in einem applizierbaren Zeitintervall voneinander weniger als ein vorgegebener Schwellenwert abweichen, davon ausgegangen wird, dass diese Tracking -Daten, im Folgenden Fahrzeugstillstandsdaten genannt, einem potentiellen Abstellplatz des Fahrzeugs entsprechen. Im Rahmen einer Weiterbildung wird geprüft, ob die Fahrzeugstillstandsdaten einer abwechselnd durchgeführten Vorwärts- und Rückwärtsbewegung unterhalb des vorgegebenen Schwellenwertes entsprechen, wobei, wenn dies der Fall ist, davon ausgegangen wird, dass es sich bei diesen Bewegungen mit hoher Wahrscheinlichkeit um einen Parkvorgang handelt, so dass die Fahrzeugstillstandsdaten dem Abstellplatz des Fahrzeugs mit hoher Wahrscheinlichkeit entsprechen.

Wenn wie bereits erläutert anschließend der Ort ermittelt wird, an dem das mobile elektronische Gerät vom Fahrzeug-Bewegungsprofil in ein Fußgänger-Bewegungsprofil übergeht, und dieser Ort mit einer vorgegebenen Abweichung den Fahrzeugstillstandsdaten entspricht, wird dieser Ort als Abstellplatz des Fahrzeugs ermittelt.

Gemäß einer Weiterbildung der Erfindung kann für den Fall eines Parkplatzes oder eines Parkhauses mittels Mittel zur Detektion von mobilen elektronischen Geräten über einen Kommunikationsstandard zur drahtlosen Kommunikation an der Einfahrt erkannt werden, ob sich ein mobiles elektronisches Gerät im Fahrzeug befindet, wobei, wenn sich ein mobiles elektronisches Gerät im Fahrzeug befindet, dieses in einer Datenbank, die mit einem Server verbunden ist, dem Fahrzeug zugeordnet wird, in dem sich das mobile elektronische Gerät befindet. Dies, d.h. die Verknüpfung eines mobilen elektronischen Gerätes mit einem Fahrzeug kann beispielsweise durch Erfassung eines eindeutigen Merkmals des Fahrzeugs, beispielsweise des Kennzeichens des Fahrzeugs und Verknüpfung des erfassten Merkmals, z.B. des Kennzeichens mit einer über den Kommunikationsstandard gesendeten und von dem Mittel zur Detektion von mobilen elektronischen Geräten erfassten eindeutigen ID des mobilen elektronischen Gerätes erfolgen. Die Mittel zur Detektion von mobilen elektronischen Geräten über den Kommunikationsstandard zur drahtlosen Kommunikation können beispielsweise RFID-, BLE-, UWB-, oder WLAN Sende/Empfangseinheiten sein.

Hierbei wird nach der Verknüpfung des Fahrzeugs mit dem mobilen elektronischen Gerät eine Verbindung zur drahtlosen Datenkommunikation über einen Kommunikationsstandard, beispielsweise über GSM oder WLAN zwischen dem mobilen elektronischen Gerät und einem Server hergestellt, wobei über diese Verbindung der nach dem beschriebenen Verfahren ermittelte Abstellplatz an den Server übermittelt wird.

Durch die erfindungsgemäße Konzeption wird ein Verfahren zur Ermittlung des Abstellplatzes eines Fahrzeugs zur Verfügung gestellt, welches minimale Hardware-Anforderungen aufweist. Zur Durchführung des Verfahrens erforderliche Daten werden im mobilen elektronischen Gerät generiert und ausgewertet.

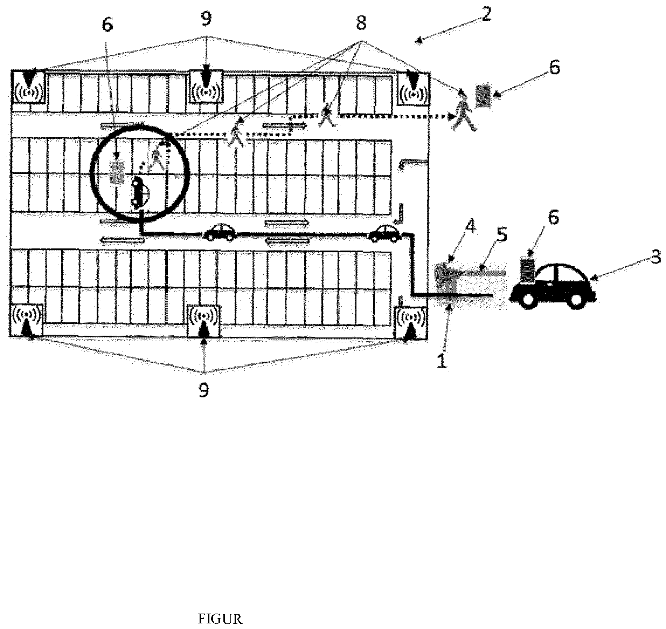

Die Erfindung wird im Folgenden anhand der beigefügten Figur anhand der Ermittlung des Abstellplatzes eines Fahrzeugs in Parkhaus ohne GPS-Abdeckung beispielhaft näher erläutert.

In der beigefügten Figur ist mit 1 eine Einfahrt eines Parkhauses 2 bezeichnet, an der eine Zugangskontrollvorrichtung 4 umfassend einen Schrankenbaum 5 vorgesehen ist; mit dem Bezugszeichen 3 ist ein Fahrzeug bezeichnet, welches an der Einfahrt 1 steht, wobei sich im Fahrzeug 3 ein mobiles elektronisches Gerät 6 befindet.

Erfindungsgemäß wird als Abstellplatz des Fahrzeugs 3 der Ort 7 ermittelt, an dem das mobile elektronische Gerät 6 von einem Fahrzeug-Bewegungsprofil in ein Fußgänger-Bewegungsprofil übergeht. In der Figur steigt der Fahrer 8 am Abstellplatz 7 aus dem Fahrzeug 3 aus und bewegt sich anschließend zu Fuß, wobei er das mobile elektronische Gerät 6 bei sich trägt. Die Unterscheidung zwischen dem Fahrzeug-Bewegungsprofil und dem Fußgänger-Bewegungsprofil erfolgt mittels einer Auswertung der Daten von Sensoren des mobilen elektronischen Gerätes 6 über geeignete Software im mobilen elektronischen Gerät 6.

Der Abstellplatz 7 des Fahrzeugs, d.h. der Ort, an dem das mobile elektronische Gerät 6 vom Fahrzeug-Bewegungsprofil in ein Fußgänger-Bewegungsprofil übergeht wird bei dem gezeigten Beispiel anhand eines Trackings des mobilen elektronischen Gerätes 6 mittels Mittel 9 zur Detektion von mobilen elektronischen Geräten über einen Standard zur drahtlosen Kommunikation, beispielsweise über BLE ermittelt; der Abstellplatz 7 entspricht dem Ort der Lokalisierung des mobilen elektronischen Gerätes 6 anhand des Trackings zum Zeitpunkt des Übergangs des mobilen elektronischen Gerätes 6 vom Fahrzeug-Bewegungsprofil in ein Fußgänger-Bewegungsprofil. Hierbei werden die Tracking-Daten über den Standard zur drahtlosen Kommunikation an das mobile elektronische Gerät 6 übermittelt, wobei im mobilen elektronischen Gerät 6 die Tracking-Daten dem Bewegungsprofil als Funktion der Zeit zugeordnet werden, wodurch der Abstellplatz 7 als der Ort, an dem das mobile elektronische Gerät 6 von einem Fahrzeug-Bewegungsprofil in ein Fußgänger-Bewegungsprofil übergeht ermittelt werden kann.

## Patentansprüche

1. Verfahren zur Ermittlung des Abstellplatzes (7) eines Fahrzeugs (3), **dadurch gekennzeichnet, dass** als Abstellplatz (7) des Fahrzeugs (3) der Ort ermittelt wird, an dem ein im Fahrzeug befindliches mobiles elektronisches Gerät (6) von einem Fahrzeug-Bewegungsprofil in ein Fußgänger-Bewegungsprofil übergeht.

2. Verfahren zur Ermittlung des Abstellplatzes (7) eines Fahrzeugs (3), nach Anspruch 1, **dadurch gekennzeichnet, dass** die Unterscheidung zwischen dem Fahrzeug-Bewegungsprofil und dem Fußgänger-Bewegungsprofil mittels einer Auswertung der Daten der Sensoren des mobilen elektronischen Gerätes (6) über geeignete Software im mobilen elektronischen Gerät (6) erfolgt.

3. Verfahren zur Ermittlung des Abstellplatzes (7) eines Fahrzeugs (3), nach Anspruch 2, **dadurch gekennzeichnet, dass** für den Fall eines Abstellplatzes im Freien oder für den Fall eines Parkhauses mit Satelliten-Empfang für das GPS-Modul der mobilen elektronischen Geräte (6) der Ort, an dem das mobile elektronische Gerät (6) vom Fahrzeug-Bewegungsprofil in ein Fußgänger-Bewegungsprofil übergeht anhand der GPS-Daten des GPS-Moduls des mobilen elektronischen Gerätes (6) zu diesem Zeitpunkt ermittelt wird.

4. Verfahren zur Ermittlung des Abstellplatzes (7) eines Fahrzeugs (3), nach Anspruch 2, **dadurch gekennzeichnet, dass** für den Fall eines Parkhauses ohne Satelliten-Empfang für ein GPS-Modul der mobilen elektronischen Geräte (6), der Ort, an dem das mobile elektronische Gerät (6) vom Fahrzeug-Bewegungsprofil in ein Fußgänger-Bewegungsprofil übergeht, anhand eines Trackings des mobilen elektronischen Gerätes (6) mittels mit einem Server verbundener Mittel (9) zur Detektion von mobilen elektronischen Geräten (6) über einen Kommunikationsstandard zur drahtlosen Kommunikation ermittelt wird, wobei die Tracking-Daten über den Standard zur drahtlosen Kommunikation an das mobile elektronische Gerät (6) übermittelt werden, wobei im mobilen elektronischen Gerät (6) die Tracking-Daten dem Bewegungsprofil als Funktion der Zeit zugeordnet werden, wodurch der Abstellplatz (7) ermittelt wird.

5. Verfahren zur Ermittlung des Abstellplatzes (7) eines Fahrzeugs (3), nach Anspruch 2, **dadurch gekennzeichnet, dass** für den Fall eines Parkhauses ohne Satelliten-Empfang für ein GPS-Modul der mobilen elektronischen Geräte (6), der Ort, an dem das mobile elektronische Gerät (6) vom Fahrzeug-Bewegungsprofil in ein Fußgänger-Bewegungsprofil übergeht, dadurch ermittelt wird, dass Signalgeber vorgesehen sind, die in vorgegebenen Zeitintervallen nach einem Standard zur drahtlosen Kommunikation Signale senden, welche von den mobilen elektronischen Geräten (6) empfangen und im mobilen elektronischen Gerät (6) ausgewertet werden.

6. Verfahren zur Ermittlung des Abstellplatzes (7) eines Fahrzeugs (3), nach Anspruch 3, **dadurch gekennzeichnet, dass** zur Ermittlung des Abstellplatzes (7) zusätzlich zu den GPS-Daten des mobilen elektronischen Gerätes (6) der Ort, an dem das mobile elektronische Gerät (6) vom Fahrzeug-Bewegungsprofil in ein Fußgänger-Bewegungsprofil übergeht, anhand eines Trackings des mobilen elektronischen Gerätes mittels Mittel (9) zur Detektion von mobilen elektronischen Geräten (6) nach Anspruch 4 oder mittels eines Trackings anhand von Signalen von Signalgebern nach Anspruch 5 ermittelt wird, wodurch die Genauigkeit des Verfahrens erhöht wird.

7. Verfahren zur Ermittlung des Abstellplatzes (7) eines Fahrzeugs (3), nach einem der vorangehenden Ansprüche, **dadurch gekennzeichnet, dass** zur Erhöhung der Genauigkeit der Ermittlung des Abstellplatzes (7) des Fahrzeugs (3) das Bewegungsprofil des Fahrzeugs (3) herangezogen wird, welches anhand der GPS-Daten und/oder anhand des Trackings des mobilen elektronischen Gerätes (6) über Mittel (9) zur Detektion von mobilen elektronischen Geräten (6) oder über ein Tracking anhand von Signalen von Signalgebern gewonnen wird.

8. Verfahren zur Ermittlung des Abstellplatzes (7) eines Fahrzeugs (3), nach Anspruch 7, **dadurch gekennzeichnet, dass** die GPS-Daten und/oder die Tracking-Daten des mobilen elektronischen Gerätes (6) als Funktion der Zeit analysiert werden, wobei, wenn die Daten in einem applizierbaren Zeitintervall voneinander weniger als ein vorgegebener Schwellenwert abweichen, davon ausgegangen wird, dass diese Daten einem potentiellen Abstellplatz des Fahrzeugs (3) entsprechen.

9. Verfahren zur Ermittlung des Abstellplatzes (7) eines Fahrzeugs (3), nach Anspruch 8, **dadurch gekennzeichnet, dass** geprüft wird, ob die Daten, die einem potentiellen Abstellplatz des Fahrzeugs (3) entsprechen einer abwechselnd durchgeführten Vorwärts- und Rückwärtsbewegung unterhalb des vorgegebenen Schwellenwertes entsprechen, wobei, wenn dies der Fall ist, davon ausgegangen wird, dass es sich bei diesen Bewegungen mit hoher Wahrscheinlichkeit um einen Parkvorgang handelt, so dass die Daten, die einem potentiellen Abstellplatz des Fahrzeugs (3) entsprechen, dem Abstellplatz des Fahrzeugs (3) mit hoher Wahrscheinlichkeit entsprechen.

10. Verfahren zur Ermittlung des Abstellplatzes (7) eines Fahrzeugs (3), nach einem der vorangehenden Ansprüche, **dadurch gekennzeichnet, dass** für den Fall eines Parkplatzes oder eines Parkhauses mittels Mittel zur Detektion von mobilen elektronischen Geräten über einen Kommunikationsstandard zur drahtlosen Kommunikation an der Einfahrt (1) erkannt wird, ob sich ein mobiles elektronisches Gerät (6) im Fahrzeug (3) befindet, wobei, wenn sich ein mobiles elektronisches Gerät (6) im Fahrzeug (3) befindet, dieses in einer Datenbank dem Fahrzeug (3) zugeordnet wird, in dem sich das mobile elektronische Gerät (6) befindet, wobei nach der Verknüpfung des Fahrzeugs (3) mit dem mobilen elektronischen Gerät (6) eine Verbindung zur drahtlosen Datenkommunikation über einen Kommunikationsstandard zwischen dem mobilen elektronischen Gerät (6) und einem Server hergestellt wird, über die der ermittelte Abstellplatz (7) an den Server übermittelt wird.
